# EUROPÄISCHE PATENTSCHRIFT

(11) **EP 0 555 673 B1**
(45) Veröffentlichungstag und Bekanntmachung des Hinweises auf die Patenterteilung: **18.10.1995**
(21) Anmeldenummer: 93100987.2
(22) Anmeldetag: 22.01.1993
(51) Int. Cl.: C09D 13/00

(54) **Farbmine**
Coloured lead
Mine de couleur

(30) Priorität: 07.02.1992 DE 9201503 U
(43) Veröffentlichungstag der Anmeldung: 18.08.1993
(73) Patentinhaber: A.W. Faber- Castell Unternehmensverwaltung GmbH & Co., D-90547 Stein (DE)
(72) Erfinder: Schlennert, Barbara, W-8501 Grosshabersdorf (DE)
(74) Vertreter: Tergau, Enno, Dipl.-Ing.

(56) Entgegenhaltungen:
- US-A- 4 741 774
- US-A- 4 990 013

## Beschreibung

Die Erfindung betrifft eine Farbstiftmine, die auf Papier oder anderen Zeichenunterlagen einen farbigen Abstrich mit Metallik- und/oder Glanzeffekt ergibt.

Derartige Farbminen bzw. -stifte sind seit langem bekannt und beispielsweise in der DE-Patentschritt Nr. 67081 (aus dem Jahre 1892) beschrieben. Sie weisen eine Paraffingrundmasse auf, in der Farbstoffe, Pigmente sowie Metallpulver und -zur Erreichung eines Glanzeffektes- Glimmerpulver verteilt sind. Die bekannten Farbminen haben den Nachteil einer verhältnismäßig geringen mechanischen Stabilität. Daraus ergibt sich eine große Bruchempfindlichkeit beim Schreiben und insbesondere beim Spitzen. Aufgrund der geringen mechanischen Stabilität ist es auch nicht möglich, aus der bekannten Grundmasse Minen mit dünnem Durchmesser, beispielsweise von etwa 3 mm für Stifte mit dünnem Abstrich, herzustellen. Um Minen mit kräftigem Metallik- und Glanzeffekt zu erhalten, müssen die Anteile an Metall- und Glimmerpulver entsprechend hoch sein. Dies führt naturgemäß zu einer weiteren Reduzierung der mechanischen Stabilität der Minen.

Ein weiterer Nachteil der bekannten Minen besteht darin, daß sie sich nicht weich und gleichmäßig auf die Zeichenunterlage aufbringen lassen. Die Rei-bungsverhältnisse zwischen Minenspitze und Zeichenunterlage ändern sich vielmehr unkontrolliert, so daß nur eine relativ ruckhafte Strichführung möglich ist.

In der US-PS 4,859,242 sind Zusammensetzungen für wasserlösliche Farben angegeben, die auch "Glitzerelemente" in Form von Metallpulvern oder Mischungen aus "Titanoxid, Chromhydroxid und Glimmer" enthalten. Diese bekannten Farbzusammensetzungen eignen sich aber nicht für die Herstellung von Farbstiftminen mit den oben angegebenen Durchmessern von etwa 3 mm. Sie sind allenfalls für die Herstellung von Farbkreiden geeignet, deren Durchmesser wesentlich größer ist und im Bereich von etwa 8 bis 16 mm liegt.

Dementsprechend offenbart die genannte Patentschrift auch nur die Zusammensetzung für eine Farbkreide, mit einem für solche Kreiden üblichen "Fettanteil" von 60 %. Der Fettanteil kann dabei entweder aus Wachs oder aus einer Mischung von Stearinsäure mit einem Emulgator bestehen. Die US-PS 4,990,013 offenbart ebenfalls nur Zusammensetzungen für Wachsmalkreiden, die einen Gehalt von 25-50 % Stearinsäure, 30-65 % Paraffinwachs, 1-20 % Candellila-Wachs und 1-20 % Carnaubawachs enthalten. Zur Erzeugung von Lichtreflexen ist diesen bekannten Zusammensetzungen für Wachsmalkreiden ein Anteil von 0,01-5 % reflektierender Flocken zugesetzt. Auch diese Massen weisen nicht die erforderliche Stabilität auf, um damit Stiftminen von sehr dünnem Durchmesser herzustellen.

Davon ausgehend ist es die Aufgabe der Erfindung, stabile Farbstiftminen herzustellen, welche eine hohe Konzentration an Metallpulver und Glimmer beinhalten.

Diese Aufgabe wird durch die kennzeichnenden Merkmale des Anspruches 1 gelöst. Minen, deren Grundmasse eine oder mehrere Fettsäuren, einen Emulgator und ein Bindemittel enthält, sind sog. Emulsionsminen. Sie gehören grundsätzlich zum Stande der Technik, jedoch lediglich als einfache Farbminen ohne jeden Metallik- oder Glanz-Effekt. Der Hauptbestandteil der Emulsionsminen kann beispielsweise aus Stearinsäure bestehen, in der ein Bindemittel, meist Methylzellulose, verteilt ist. Um die beiden Stoffe hinreichend zu dispergieren, ist der Zusatz eines W/O-Emulgators erforderlich. Außerdem können diesen Massen Farbmittel, beispielsweise in Form von Pigmenten in Mengen von etwa 0,4 bis 30 Gew% zugesetzt sein.

Überraschenderweise wurde nun gefunden, daß mit solchen Massen unter Zusatz von plättchenförmigen Metallpulvern und Glimmern hergestellte Minen farbschöne Abstriche mit Glanz- oder Metallik-Effekt ergeben und gegenüber den Paraffin-Minen verbesserte mechanische Eigenschaften und ein gleichmäßiges und weiches Abstrichverhalten aufweisen.

Eine vorteilhafte Ausführungsform einer erfindungsgemäßen Farbmine hat folgende Zusammensetzung:

| | |
|---|---|
| Stearinsäure | 15 bis 25 Gew% |
| W/O-Emulgator | 0,5 bis 2 Gew% |
| Bindemittel | 7 bis 10 Gew% |
| Pigmente | 0,4 bis 25 Gew% |
| Glimmerpulver | 25 bis 45 Gew% |
| Metallpulver | 15 bis 45 Gew%. |

Die in der vorausgehenden Rezeptur angegebene Stearinsäure kann auch durch andere langkettige gesättigte Fettsäuren ersetzt werden, welche bei Raumtemperatur fest sind. In Betracht kommen beispielsweise Palmitinsäure, Margarinsäure, aber auch Nonadecylsäure. Auch Mischungen dieser Fettsäuren sind anwendbar.

Als Bindemittel wird vorzugsweise Methylzellulose eingesetzt. Es sind aber auch andere Stoffe mit entsprechenden Eigenschaften, wie beispielsweise Dextrin, modifizierte Stärke usw. einsetzbar.

Als W/O-Emulgator (Wasser/Oel-Emulgator) werden vorzugsweise die zu diesem Zweck käuflichen Sorbitanester zugesetzt.

Das als Glanzmittel eingesetzte Glimmerpulver soll vorzugsweise farblos sein. Gefärbte Sorten, beispielsweise Sorten, deren Teilchen einen TiO₂-Überzug tragen, können für spezielle Zwecke ebenfalls eingesetzt werden.

Als Metallpulver kommen in erster Linie solche mit plättchenförmiger Struktur in Betracht, also Aluminium-, Kupfer- oder Bronze-Pulver. Für spezielle Zwecke können aber auch Edelmetalle, insbesondere Gold oder Goldlegierungen eingesetzt werden.

Eine Rezeptur, welche sich besonders bewährt hat, ist die folgende:

| | |
|---|---|
| Stearinsäure | 20 Gew% |
| Sorbitanester | 1 Gew% |
| Methylzellulose | 7 bis 10 Gew% |
| Pigmente | 0,4 bis 25 Gew% |
| Glimmerpulver | 30 bis 40 Gew% |
| Al-,Cu- oder Bronze-Pulver | 18 bis 40 Gew%. |

Als Pigmente kommen alle gängigen anorganischen und organischen Pigmentstoffe in Betracht, insbesondere solche, die ungiftig sind. Neben reinen Pigmenten können auch verschnittene Pigmente (beispielsweise Zusatz von Aluminiumsilikat, Magnesiumsilikat, Talkum, Tonerde, Kieselgrur oder Bentonit) verwendet werden. Auch geschönte Pigmente sind einsetzbar, sofern der Schönungsfarbstoff lichtbeständig ist.

Zur Herstellung der Minenmasse wird vorteilhafterweise so vorgegangen, daß die Bestandteile Glimmer, Pigmente, Bindemittel, W/O-Emulgator in einem Mischer oder Kneter innig miteinander vermischt werden. In einem zweiten Schritt werden dann die in Betracht kommenden Metallpulver zugesetzt und erneut kurz gemischt. Die entstandene Masse wird nach dem Extrusionsverfahren zu Minen verarbeitet und diese dem üblichen Trocken- und Weiterverarbeitungsprozeß unterworfen.

## Patentansprüche

1. Farbstiftmine
gekennzeichnet durch
die folgende Zusammensetzung:
| | |
|---|---|
| Fettsäure: | 10 % - 35 % |
| Emulgator: | 0,5 % - 5 % |
| Bindemittel: | 5 % - 15 % |
| Farbmittel: | 0,4 % - 30 % |
| Glimmerpulver: | 10 % - 50 % |
| Metallpulver: | 10 % -50 %. |

2. Farbstiftmine nach Anspruch 1
gekennzeichnet durch
folgende Zusammensetzung (Gew. %):
| | |
|---|---|
| Stearinsäure: | 15 % - 25 % |
| W/O-Emulgator: | 0,5 % - 2 % |
| Bindemittel: | 7 % - 10 % |
| Pigmente: | 0,4 % - 25 % |
| Glimmerpulver: | 25 % - 45 % |
| Metallpulver: | 15 % -45 %. |

3. Farbstiftmine nach Anspruch 2,
gekennzeichnet durch folgende Zusammensetzung (Gew. %):
| | |
|---|---|
| Stearinsäure: | 20 % |
| Sorbitanester: | 1 % |
| Zelluloseether | 7 % - 10 % |
| Pigmente | 0,4 % - 25 % |
| Glimmerpulver: | 30 % - 40 % |
| Al-,Cu- oder Bronze-Pulver: | 18 % -40 %. |

## Claims

1. Coloured lead characterized by the following composition (in weight percent):
| | |
|---|---|
| fatty acid | 10% to 35% |
| emulsifier | 0,5% to 5% |
| binder | 5% to 15% |
| colorants | 0,4% to 30% |
| mica powder | 10% to 50% |
| metal powder | 10% to 50% |

2. Coloured lead according to claim 1, characterized by the following composition (in weight percent):
| | |
|---|---|
| stearic acid | 15% to 25% |
| W/O emulsifier | 0,5% to 2% |
| binder | 7% to 10% |
| pigments | 0,4% to 25% |
| mica powder | 25% to 45% |
| metal powder | 15% to 45%. |

3. Coloured lead according to claim 2, characterized by the following composition (in weight percent):
| | |
|---|---|
| stearic acid | 20% |
| sorbitan ester | 1% |
| cellulose ether | 7% to 10% |
| pigments | 0,4% to 25% |
| mica powder | 30% to 40% |
| Al, Cu or bronze powder | 18% to 40% |

## Revendications

1. Mine couleur, caractérisée par la composition suivante (poids en %):
| | |
|---|---|
| Acide gras: | 10% - 35% |
| Emulsifiant: | 0,5% - 5% |
| Agent agglutinant: | 5% - 15% |
| Matière colorante: | 0,4% - 30% |
| Poudre de mica: | 10% - 50% |
| Poudre métallique: | 10% - 50% |

2. Mine couleur selon la revendication 1, caractérisée par la composition suivante (poids en %):
| | |
|---|---|
| Acide stéarique: | 15% - 25% |
| Emulsifiant eau/huile: | 0,5% - 2% |
| Agent agglutinant: | 7% - 10% |
| Pigments: | 0,4% - 25% |
| Poudre de mica: | 25% - 45% |
| Poudre métallique: | 15% - 45% |

3. Mine couleur selon la revendication 2, caractérisée par la composition suivante (poids en %):
| | |
|---|---|
| Acide stéarique: | 20% |
| Ester de sorbital | 1% |
| Ether cellulosique: | 7% - 10% |
| Pigments: | 0,4% - 25% |
| Poudre de mica: | 30% - 40% |
| Poudre de Al, de Cu ou de bronze: | 18% - 40% |
